# EUROPEAN PATENT SPECIFICATION

(11) **EP 1 826 961 B1**
(45) Date of publication and mention of the grant of the patent: **14.03.2012**
(21) Application number: 06705606.9
(22) Date of filing: 27.01.2006
(51) Int. Cl.: H04L 12/56

(54) **A METHOD FOR CREATING A RETURN LABEL SWITCHED PATH IN A MULTI-PROTOCOL LABEL SWITCHING SYSTEM**
VERFAHREN ZUM AUFBAU EINES ETIKETTENVERMITTELTEN RÜCKWÄRTSPFADS IN EINEM MEHRFACHPROTOKOLLETIKETTENVERMITTLUNGSSYSTEM
PROCEDE POUR LA CREATION D'UN TRAJET DE RETOUR A COMMUTATION D'ETIQUETTES DANS UN SYSTEME DE COMMUTATION D'ETIQUETTES MULTIPROTOCOLE

(30) Priority: 27.01.2005 CN 200510002995
(43) Date of publication of application: 29.08.2007
(73) Proprietor: Huawei Technologies Co., Ltd., Longgang District, Shenzhen Guangdong 518129 (CN)
(72) Inventor: LU, Chaogang, Shenzhen, Guangdong 518129 (CN); FU, Wei, Shenzhen Guangdong 518129 (CN); QUAN, Xingyue, Shenzhen Guangdong 518129 (CN); LI, Xiaodong, Shenzhen Guangdong 518129 (CN); HE, Jianfei, Shenzhen Guangdong 518129 (CN)
(74) Representative: Körber, Martin Hans
(86) International application number: PCT/CN2006/000185
(87) International publication number: WO 2006/079292

(56) References cited:
- EP-A2- 1 318 648
- WO-A1-01/30000
- WO-A1-02/087175
- CN-A- 1 520 102
- US-A1- 2002 057 691
- SHARMA V ET AL: "Framework for Multi-Protocol Label Switching (MPLS)-based Recovery; rfc3469.txt" IETF STANDARD, INTERNET ENGINEERING TASK FORCE, IETF, CH, 1 February 2003 (2003-02-01), XP015009252 ISSN: 0000-0003

## Description

### Field of the Invention

The present invention relates to the Label Switch Path (LSP) protection method in Multi-Protocol Label Switching (MPLS) technologies, and more particularly, to a method, and a system for establishing a return LSP in an MPLS system.

### Background of the Invention

MPLS is an emerging routing and switching technology for providing high-speed reliable transmission of data packets. An IP router, an ATM switch and a Frame Relay (FR) switch using the MPLS are called by a joint name, Label Switch Router (LSR). A transmission channel composed of a set of interconnected LSRs is referred to as an LSP. To enable a packet to be transmitted to a sink node correctly, an LSP is generally protected by using a 1+1 protection mode or a 1:1 protection mode in an MPLS network.

In the 1+1 protection mode, a dedicated backup LSP is used as a protection LSP of a working LSP in the MPLS network. The working LSP and the protection LSP connect to each other at a source node and a sink node of traffic. The source node duplicates the working traffic on the protection LSP, and sends the working traffic to the sink node simultaneously. In a normal condition, the sink node only receives a packet transmitted by the working LSP. When the working LSP fails or the transmission quality thereof is unable to meet a requir ement, the sink node will receive the packet transmitted by the protection LSP, i.e. when the working LSP fails, the sink node will switch the working traffic to the protection LSP.

In the 1:1 protection mode, a working LSP and a protection LSP also connect to each other at a source node and a sink node of traffic. The difference from the 1+1 protection mode is that, in a normal condition, the protection LSP is able to transmit extra traffic; when the working LSP fails and the working traffic needs to be transmitted by the protection LSP, the source node and the sink node will switch the working traffic to the protection LSP for transmission.

In the above two protection modes, the failure of the working LSP is usually detected by the sink node according to an MPLS protocol. Therefore, to switch the working traffic to the protection LSP, it is necessary to send LSP failure information to the source node when the sink node detects a failure; as a result, after receiving the LSP failure information, the source node will switch the working traffic to the protection LSP for transmission to complete the protection switching. As can be seen, to implement the above protection switching procedure, an LSP, from the sink node to the source node, for transmitting the LSP failure information is further needed between the source node and the sink node apart from the working LSP and the protection LSP, which is referred to as a return LSP herein. In this way, in the case of detecting the failure of the working LSP, the sink node will send the LSP failure information to the source node via the return LSP, so as to implement the protection switching of the working traffic.

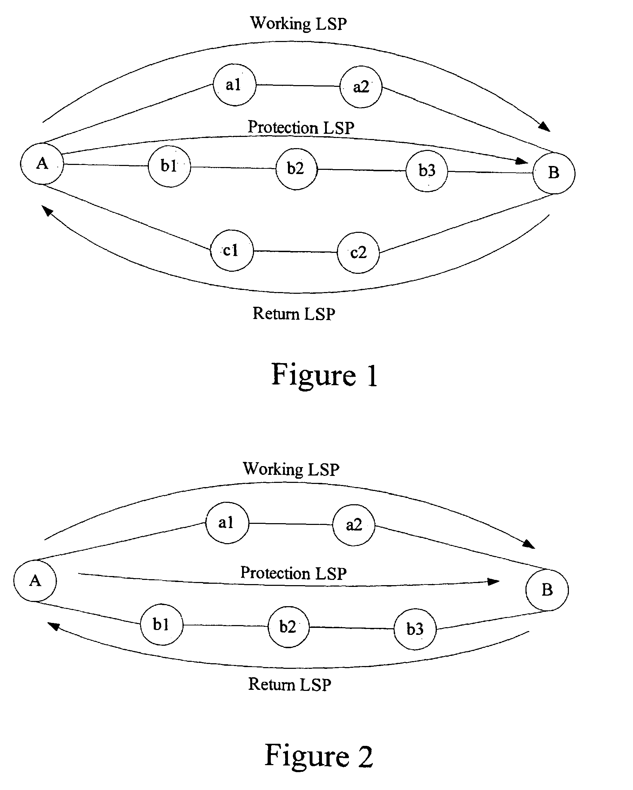

Figure 1 is a schematic diagram illustrating a working LSP, a protection LSP and a return LSP in an MPLS network. Referring to Figure 1, to protect traffic to be transmitted, it is necessary to establish three LSPs between Source node A and Sink node B, i.e. a working LSP, for transmitting the traffic in a normal condition, passing through LSRs of A-a1-a2-B successively, a protection LSP, for transmitting the traffic in the case that the working LSP fails or transmission quality is impaired, passing through LSRs of A-b1-b2-b3-B successively, and a return LSP, for transmitting the LSP failure information in the case that the sink node detects that the working LSP fails, passing through LSRs of B-c2-cl-A successively.

According to an MPLS protocol, a working LSP and a protection LSP may be established by means of a routing algorithm or a manually-designated mode; however, a method for effectively determining a return LSP is not given in the MPLS protocol. In general, the return LSP may also be established by means of a routing algorithm.

In the case of determining a return LSP by means of a routing algorithm, it is possible that the determined return LSP overlaps with the working LSP, i.e. the return LSP is established along the reverse of the path of the working LSP, i.e., the reverse path of the working LSP. As a result, once the overlapping networks fail, LSP failure information sent by the sink node is unable to be transmitted to the source node

correctly via the return LSP, which eventually results in the failure of the protection switching.

US 2002/0057691 discloses a label switching router placed at one end of an LSP set by using CRLDP which automatically establishes a pair of bidirectional LSPs by making use of an existing network with a single operation.

### Summary of the Invention

Embodiments of the present invention provide a method, and a system for establishing a return Label Switch Path (LSP) in a Multi-Protocol Label Switching (MPLS) system to effectively avoid that the return LSP overlaps with a working LSP, which makes it possible to guarantee that LSP failure information sent by a sink node can be received by a source node correctly in the case that the working LSP fails, thereby ensuring the normal operation of protection switching.

A method for establishing a return Label Switch Path, LSP, in a Multi-Protocol Label Switching, MPLS, system, includes:
obtaining, by a last node in a procedure of establishing a protection LSP corresponding to a working LSP, a path of the protection LSP upon establishing the protection LSP according to an explicit routing object or a record routing object carried or recorded in a protection LSP establishment request,;
constructing, by the last node, a first explicit routing object along the reverse of the path of the protection LSP; and
establishing, by each node on the protection LSP, a return LSP according to the first explicit routing object.

The obtaining the path of the protection LSP path according to an explicit routing object or a record routing object includes: obtaining the path of the protection LSP carried in an explicit routing object or a record routing object recorded in the protection LSP establishment request, and storing the path of the protection LSP.

A node initiating to establish the protection LSP is a source node of traffic;
the last node is a sink node of the traffic.

A node initiating to establish the protection LSP is a sink node of traffic;
the last node is a source node the traffic.

The constructing the first explicit routing object along the reverse of the path of the protection LSP includes: recording, according to the reverse of a sequence of all the nodes on the protection LSP, all the nodes on the protection LSP in the first explicit routing object successively.

The method further includes: establishing a protection LSP of the return LSP.

The establishing the protection LSP of the return LSP includes:
recording, by a last node in the procedure of establishing a working LSP, a path of the working LSP upon establishing the working LSP;
constructing, by the last node in the procedure of establishing a working LSP, a second explicit routing object along the reverse of the path of the working LSP;
establishing the protection LSP of the return LSP according to the second explicit routing object.

The recording the path of the working LSP includes: obtaining the path of the working LSP recorded by an explicit routing object or a record routing object carried in a working LSP establishment request, and storing the path of the working LSP.

The constructing the second explicit routing object along the reverse of the path of the working LSP includes: recording, according to the reverse of a sequence of all the nodes on the working LSP, all the nodes on the working LSP in the second explicit routing object successively.

A system for establishing a return Label Switch Path, LSP, in a Multi-Protocol Label Switching, MPLS, system, includes:
a last node, adapted to obtain a path of a protection LSP corresponding to a working LSP according to an explicit routing object or a record routing object carried or recorded in a protection LSP establishment request, upon establishing the protection LSP, and construct a first explicit routing object along the reverse of the path of the protection LSP; and
at least one second node, on the protection LSP, wherein each node is adapted to establish a return LSP for sending LSP failure information of the working LSP according to the first explicit routing object.

The last node is further adapted to record a path of a working LSP upon establishing the working LSP, and construct a second explicit routing object along the reverse of the path of the working LSP;
the at least one second node is further adapted to establish the protection LSP of the return LSP according to the second explicit routing object.

As can be seen, the method for establishing a return LSP in an MPLS system in accordance with the embodiments of the present invention obtains a path of the protection LSP by carrying an explicit routing object or a record routing object in a protection LSP establishment request, and establishes a return LSP along the reverse of the path of the protection LSP, so as to effectively avoid that the return LSP overlaps with the working LSP. In accordance with the embodiments of the present invention, it is possible to guarantee the transmission of LSP failure information via the return LSP in the case that the working LSP fails or transmission quality is impaired, thereby ensuring the normal operation of protection switching.

In accordance with the embodiments of the present invention, similar to the above method, another protection LSP is established by regarding the reverse path of a working LSP as a return LSP, which makes it possible to guarantee the transmission of LSP failure information via a protection LSP of the return LSP in the reverse of the working LSP in the case that the return LSP fails, thereby further guaranteeing the reliability of the transmission of LSP failure information.

### Brief Description of the Drawings

Figure 1 is a schematic diagram illustrating a working LSP, a protection LSP and a return LSP established between a source node and a sink node in the prior art.
Figure 2 is a schematic diagram illustrating a working LSP, a protection LSP and a return LSP established between a source node and a sink node in accordance with an embodiment of the present invention.

### Embodiments of the Invention

The present invention is hereinafter further described in detail with reference to accompanying drawings as well as embodiments so as to make the technical solution and merits thereof more apparent.

To avoid that a working LSP overlaps with a return LSP established according to a routing algorithm, embodiments of the present invention provide a method for establishing a return LSP. The method including: establishing a return LSP along the reverse of a path of a protection LSP to enable the return LSP to overlap with the protection LSP, which makes it possible to guarantee that LSP failure information sent by a sink node can be received correctly by a source node and switch working traffic to the protection LSP in the case that the working LSP fails.

Figure 2 is a schematic diagram illustrating a working LSP, a protection LSP and a return LSP established between a source node and a sink node in accordance with an embodiment of the present invention, wherein A-al-a2-B are LSRs through which the working LSP passes; A-b1-b2-b3-B are LSRs through which the protection LSP passes; and B-b3-b2-b1-A are LSRs through which the return LSP passes. With reference to Figure 2, the return LSP is established along the reverse of a path of the protection LSP.

The method of the present invention will be hereinafter described in detail with respect to embodiments. The establishment of a protection LSP may be initiated by a source node or a sink node. In the case that the establishment of the protection LSP is initiated by the source node, a sink node is the last node of the procedure of establishing the protection LSP, and therefore, the establishment of the return LSP is initiated by the sink node.

### Embodiment 1:

The method for establishing a return LSP described in the present embodiment includes the following steps.

Step 101: a source node sends a protection LSP establishment request carrying an explicit routing object to initiate the establishment of a protection LSP; each LSR on the protection LSP establishes the protection LSP according to a path recorded in an explicit routing object.

A source node in an MPLS network is able to establish an LSP in an explicit routing mode. In the explicit routing mode, the source node predetermines a path of the protection LSP, records the path in the explicit routing object carried in the protection LSP establishment request, and sends the protection LSP establishment request to a next hop LSR recorded in the explicit routing object. In the establishment of the protection LSP, each LSR establishes a forwarding path of the protection LSP according to a next hop LSR recorded in the explicit routing object, and eventually establishes the protection LSP according to the path recorded in the explicit routing object.

Step 102: after the protection LSP is established, the sink node obtains a path of the protection LSP in an MPLS network according to the explicit routing object carried in the protection LSP establishment request.

Step 103: the sink node constructs an explicit routing object carried in a return LSP establishment request along the reverse the of the path of the protection LSP, i.e. arranging all the LSRs in the reverse direction of the sequence of all the LSRs on the protection LSP path, and successively recording them in the explicit routing object carried in the return LSP establishment request; the path recorded in the explicit routing object is a reverse path of the protection LSP.

Step 104: the sink node sends the return LSP establishment request carrying the explicit routing object constructed in Step 103 to initiate the establishment of a return LSP, each LSR on the return LSP determines a next hop LSR on the return LSP according to the explicit routing object until the source node receives the explicit routing object and eventually establishes the return LSP.

As can be seen, the return LSP, the establishment of which is initiated by the sink node using the above method, is the reverse LSP of the protection LSP.

### Embodiment 2:

The method for establishing a return LSP described in accordance with the present embodiment includes the following steps.

Step 201: a source node sends a protection LSP establishment request carrying a record routing object to initiate the establishment of a protection LSP on which each LSR establishes the protection LSP according to a routing algorithm and records a path of the protection LSP in a record routing object.

A source node in an MPLS network is able to establish an LSP in a hop-by-hop mode. In this mode, each LSR in the procedure of establishing the LSP determines a next hop LSR according to a certain routing algorithm. If a record routing object is carried in the protection LSP establishment request, each LSR in the procedure of establishing the LSP will record its next hop LSR, i.e. recording in the record routing object a forwarding path of the protection LSP. As a result, when the establishment of the protection LSP is finished, i.e. when the protection LSP establishment request arrives at the sink node, the record routing object of the protection LSP establishment request will record the whole path of the protection LSP.

Step 202: after the establishment of the protection LSP is finished, the sink node obtains the protection LSP in an MPLS network according to the record routing object recorded in the protection LSP establishment request.

Step 203: the sink node constructs an explicit routing object in a return LSP establishment request along the reverse of the path of the protection LSP, i.e. arranging all the LSRs in the reverse direction of the sequence of all the LSRs on the protection LSP path, and successively recording them in the explicit routing object; the path recorded in the explicit routing object is the reverse path of the protection LSP.

Step 204: the sink node sends the return LSP establishment request carrying the explicit routing object constructed in Step 203 to initiate the establishment of a return LSP, each LSR on the return LSP determines a next hop LSR on the return LSP according to the explicit routing object until the source node receives the explicit routing object and eventually establishes the return LSP.

As can be seen, the return LSP, the establishment of which is initiated by the sink node using the above method, is also a reverse LSP of the protection LSP.

The case that a sink node initiates the establishment of a protection LSP will be hereinafter described in detail. A source node is the last node in the procedure of establishing the protection LSP; therefore, the establishment of the return LSP is initiated by the source node.

### Embodiment 3:

Step 301: a sink node sends a protection LSP establishment request carrying an explicit routing object to initiate the establishment of a protection LSP; each LSR on the protection LSP establishes the protection LSP according to the explicit routing object.

Step 302: after the establishment of the protection LSP is finished, a source node obtains a path of the protection LSP in an MPLS network according to the explicit routing object carried in the protection LSP establishment request.

Step 303: the source node constructs an explicit routing object in the return LSP establishment request along the reverse of the path of the protection LSP, i.e. arranging all the LSRs in the reverse direction of the sequence of all the LSRs on the protection LSP path, and successively recording them in the explicit routing object; the path recorded in the explicit routing object is the reverse path of the protection LSP.

Step 304: the source node sends a return LSP establishment request carrying the explicit routing object constructed in Step 303 to initiate the establishment of a return LSP, each LSR on the return LSP determines a next hop LSR on the LSP according to the explicit routing object until the sink node receives the explicit routing object carried in the return LSP establishment request and eventually establishes the return LSP.

As can be seen, the return LSP, the establishment of which is initiated by the source node using the above method, is the reverse LSP of the protection LSP.

### Embodiment 4:

Step 401: a sink node sends a protection LSP establishment request carrying a record routing object to initiate the establishment of a protection LSP on which each LSR establishes the protection LSP according to a routing algorithm and records a path of the protection LSP in the record routing object.

Step 402: after the establishment of the protection LSP is finished, a source node acquires the protection LSP in an MPLS network according to the record routing object carried in the protection LSP establishment request.

Step 403: the source node constructs an explicit routing object in a return LSP establishment request along the reverse of the path of the protection LSP, i.e. arranging all the LSRs in the reverse direction of the sequence of all the LSRs on the protection LSP path, and successively recording them in the explicit routing object carried in the return LSP establishment request; the path recorded in the explicit routing object carried in the return LSP establishment request is the reverse path of the protection LSP.

Step 404: the source node sends the return LSP establishment request carrying the explicit routing object constructed in Step 403 to initiate the establishment of a return LSP, each LSR on the return LSP determines a next hop LSR of the return LSP according to the explicit routing object until the sink node receives the explicit routing object carried in the return LSP establishment request and eventually establishes the return LSP.

As can be seen, the return LSP, the establishment of which is initiated by the source node using the above method, is also the reverse LSP of the protection LSP.

The above Embodiments 1-4 provide methods for establishing a return LSP according to a path of a protection LSP recorded in a record routing object or an explicit routing object carried in a protection LSP establishment request to enable the established return LSP to overlap with the protection LSP, which makes it possible to guarantee the transmission of the LSP failure information via the return LSP in the case that a working LSP fails or transmission quality is impaired, thereby ensuring the normal operation of protection switching.

It should be noted that, to avoid that the protection switching is impossible to be normally performed if the return LSP fails, a protection LSP may be further established for the return LSP in accordance with an embodiment of the present invention. The established protection LSP of the return LSP may be a reverse path of the working LSP, an establishing method thereof is similar to the above method, i.e. carrying an explicit routing object or a record routing object in a working LSP establishment request to record a path of the working LSP, and establishing the protection LSP of the return LSP along the reverse path of the working LSP. In this way, it is possible to guarantee that the sink node is able to select a return LSP from the two return LSPs between the source node and the sink node. The reverse LSP of the working LSP may be used for transmitting LSP failure information in the case that the protection LSP fails, which greatly guarantees the reliability of the transmission of the LSP failure information.

The purpose, technical solution and merits of the present invention have been described in detail by the above preferred embodiments. It should be appreciated that the foregoing is only preferred embodiments of the present invention and is not for use in limiting the invention. Any modification, equivalent substitution, improvement within the principle of the present invention should be covered in the protection scope of the present invention.

## Claims

1. A method for establishing a return Label Switch Path, LSP, in a Multi-Protocol Label Switching, MPLS, system, **characterized by** comprising:
obtaining, by a last node in a procedure of establishing a protection LSP corresponding to a working LSP, a path of the protection LSP according to an explicit routing object or a record routing object carried or recorded in a protection LSP establishment request, upon establishing the protection LSP;
constructing, by the last node, a first explicit routing object along the reverse of the path of the protection LSP; and
establishing, by each node on the protection LSP, a return LSP for sending LSP failure information of the working LSP according to the first explicit routing object.

2. The method of Claim 1, wherein the obtaining the path of the protection LSP path according to the explicit routing object or the record routing object comprises:
obtaining the path of the protection LSP carried in an explicit routing object or a record routing object recorded in the protection LSP establishment request, and storing the path of the protection LSP.

3. The method of Claim 1 or 2, wherein a node initiating to establish the protection LSP is a source node of traffic;
the last node is a sink node of the traffic.

4. The method of Claim 1 or 2, wherein a node initiating to establish the protection LSP is a sink node of traffic;
the last node is a source node the traffic.

5. The method of Claim 1, wherein the constructing the first explicit routing object along the reverse of the path of the protection LSP comprises:
recording, according to the reverse of a sequence of all the nodes on the protection LSP, all the nodes on the protection LSP in the first explicit routing object successively.

6. The method of Claim 1, further comprising:
establishing a protection LSP of the return LSP.

7. The method of Claim 6, wherein the establishing the protection LSP of the return LSP comprises:
recording, by a last node in the procedure of establishing a working LSP, a path of the working LSP upon establishing the working LSP;
constructing, by the last node in the procedure of establishing a working LSP, a second explicit routing object along the reverse of the path of the working LSP;
establishing the protection LSP of the return LSP according to the second explicit routing object.

8. The method of Claim 7, wherein the recording the path of the working LSP comprises:
obtaining the path of the working LSP recorded by an explicit routing object or a record routing object carried in a working LSP establishment request, and storing the path of the working LSP.

9. The method of Claim 7, wherein the constructing the second explicit routing object along the reverse of the path of the working LSP comprises:
recording, according to the reverse of a sequence of all the nodes on the working LSP, all the nodes on the working LSP in the second explicit routing object successively.

10. A system for establishing a return Label Switch Path, LSP, in a Multi-Protocol Label Switching, MPLS, system, **characterized by** comprising:
a last node, adapted to obtain a path of a protection LSP corresponding to a working LSP according to an explicit routing object or a record routing object carried or recorded in a protection LSP establishment request, upon establishing the protection LSP, and construct a first explicit routing object along the reverse of the path of the protection LSP; and
at least one second node on the protection LSP, wherein each node is adapted to establish a return LSP for sending LSP failure information of the working LSP according to the first explicit routing object.

11. The system of Claim 10, wherein the last node is further adapted to record a path of a working LSP upon establishing the working LSP, and construct a second explicit routing object along the reverse of the path of the working LSP;
the at least one second node is further adapted to establish the protection LSP of the return LSP according to the second explicit routing object.

## Patentansprüche

1. Verfahren zum Herstellen eines Rück-Kennungsvermittlungsweges, Rück-LSP, in einem Mehrfachprotokoll-Kennungsvermittlungs-System, MPLS-System, **dadurch gekennzeichnet, dass** es Folgendes umfasst:
Erhalten durch einen letzten Knoten in einer Prozedur zum Herstellen eines Schutz-LSP, der einem Arbeits-LSP entspricht, eines Weges des Schutz-LSP in Übereinstimmung mit einem expliziten Routing-Objekt oder einem Aufzeichnungs-Routing-Objekt, das in einer Schutz-LSP-Herstellungsanforderung geführt wird oder aufgezeichnet ist, beim Herstellen des Schutz-LSP;
Konstruieren durch den letzten Knoten eines ersten expliziten Routing-Objekts entlang der Umkehrung des Weges des Schutz-LSP; und
Herstellen durch jeden Knoten in dem Schutz-LSP eines Rück-LSP zum Senden der LSP-Störungsinformationen des Arbeits-LSP in Übereinstimmung mit dem ersten expliziten Routing-Objekt.

2. Verfahren nach Anspruch 1, wobei das Erhalten des Weges des Schutz-LSP-Weges in Übereinstimmung mit dem expliziten Routing-Objekt oder dem Aufzeichnungs-Routing-Objekt Folgendes umfasst:
Erhalten des Weges des Schutz-LSP, der in einem expliziten Routing-Objekt oder einem Aufzeichnungs-Routing-Objekt, das in der Schutz-LSP-Herstellungsanforderung aufgezeichnet ist, geführt wird, und Speichern des Weges des Schutz-LSP.

3. Verfahren nach Anspruch 1 oder 2, wobei ein Knoten, der das Herstellen des Schutz-LSP einleitet, ein Quellknoten von Verkehr ist;
wobei der letzte Knoten ein Senkenknoten des Verkehrs ist.

4. Verfahren nach Anspruch 1 oder 2, wobei ein Knoten, der das Herstellen des Schutz-LSP einleitet, ein Senkenknoten von Verkehr ist;
wobei der letzte Knoten ein Quellknoten des Verkehrs ist.

5. Verfahren nach Anspruch 1, wobei das Konstruieren des ersten expliziten Routing-Objekts entlang der Umkehrung des Weges des Schutz-LSP Folgendes umfasst:
nacheinander Aufzeichnen in Übereinstimmung mit der Umkehrung einer Reihenfolge aller Knoten in dem Schutz-LSP aller Knoten in dem Schutz-LSP in dem ersten expliziten Routing-Objekt.

6. Verfahren nach Anspruch 1, das ferner Folgendes umfasst:
Herstellen eines Schutz-LSP des Rück-LSP.

7. Verfahren nach Anspruch 6, wobei das Herstellen des Schutz-LSP des Rück-LSP Folgendes umfasst:
Aufzeichnen durch einen letzten Knoten in der Prozedur des Herstellens eines Arbeits-LSP eines Weges des Arbeits-LSP beim Herstellen des Arbeits-LSP;
Konstruieren durch den letzten Knoten in der Prozedur des Herstellens eines Arbeits-LSP eines zweiten expliziten Routing-Objekts entlang der Umkehrung des Weges des Arbeits-LSP;
Herstellen des Schutz-LSP des Rück-LSP in Übereinstimmung mit dem zweiten expliziten Routing-Objekt.

8. Verfahren nach Anspruch 7, wobei das Aufzeichnen des Weges des Arbeits-LSP Folgendes umfasst:
Erhalten des Weges des Arbeits-LSP, der durch ein explizites Routing-Objekt oder
ein Aufzeichnungs-Routing-Objekt, das in einer Arbeits-LSP-Herstellungsanforderung geführt wird, aufgezeichnet ist, und Speichern des Weges des Arbeits-LSP.

9. Verfahren nach Anspruch 7, wobei das Konstruieren des zweiten expliziten Routing-Objekts entlang der Umkehrung des Weges des Arbeits-LSP Folgendes umfasst:
nacheinander Aufzeichnen in Übereinstimmung mit der Umkehrung einer Reihenfolge aller Knoten auf dem Arbeits-LSP aller Knoten auf dem Arbeits-LSP im zweiten expliziten Routing-Objekt.

10. System zum Herstellen eines Rück-Kennungsvermittlungsweges, Rück-LSP, in einem Mehrfachprotokoll-Kennungsvermittlungs-System, MPLS-System, **dadurch gekennzeichnet, dass** es Folgendes umfasst:
einen letzten Knoten, der dazu ausgelegt ist, einen Weg eines Schutz-LSP, der einem Arbeits-LSP entspricht, in Übereinstimmung mit einem expliziten Routing-Objekt oder einem Aufzeichnungs-Routing-Objekt, das in einer Schutz-LSP-Herstellungsanforderung geführt wird oder aufgezeichnet ist, beim Herstellen des Schutz-LSP zu erhalten und entlang der Umkehrung des Weges des Schutz-LSP ein erstes explizites Routing-Objekt zu konstruieren; und
wenigstens einen zweiten Knoten in dem Schutz-LSP, wobei jeder Knoten dazu ausgelegt ist, einen Rück-LSP für das Senden der LSP-Störungsinformationen des Arbeits-LSP in Übereinstimmung mit dem ersten expliziten Routing-Objekt herzustellen.

11. System nach Anspruch 10, wobei der letzte Knoten ferner dazu ausgelegt ist, einen Weg eines Arbeits-LSP beim Herstellen des Arbeits-LSP aufzuzeichnen und entlang der Umkehrung des Weges des Arbeits-LSP ein zweites explizites Routing-Objekt zu konstruieren;
wobei der wenigstens eine zweite Knoten ferner dazu ausgelegt ist, den Schutz-LSP des Rück-LSP in Übereinstimmung mit dem zweiten expliziten Routing-Objekt herzustellen.

## Revendications

1. Procédé d'établissement d'un Chemin de Commutation d'Etiquettes, LSP, de retour, dans un système à Commutation d'Etiquettes Multiprotocole, MPLS, **caractérisé en ce qu'**il comprend :
l'obtention, par un dernier noeud dans une procédure d'établissement d'un LSP de protection correspondant à un LSP de travail, d'un chemin du LSP de protection en fonction d'un objet de routage explicite ou d'un objet de routage d'enregistrement transporté ou enregistré dans une requête d'établissement de LSP de protection, à l'établissement du LSP de protection ;
la construction, par le dernier noeud, d'un premier objet de routage explicite dans le sens inverse du chemin du LSP de protection ; et
l'établissement, par chaque noeud sur le LSP de protection, d'un LSP de retour pour envoyer des informations de défaillance de LSP du LSP de travail en fonction du premier objet de routage explicite.

2. Procédé selon la revendication 1, dans lequel l'obtention du chemin du LSP de protection en fonction de l'objet de routage explicite ou de l'objet de routage d'enregistrement comprend :
l'obtention du chemin du LSP de protection transporté dans un objet de routage explicite ou un objet de routage d'enregistrement enregistré dans la requête d'établissement de LSP de protection, et la mémorisation du chemin du LSP de protection.

3. Procédé selon la revendication 1 ou 2, dans lequel un noeud initiateur de l'établissement du LSP de protection est un noeud source de trafic ;
le dernier noeud est un noeud récepteur du trafic.

4. Procédé selon la revendication 1 ou 2, dans lequel un noeud initiateur de l'établissement du LSP de protection est un noeud récepteur de trafic ;
le dernier noeud est un noeud source du trafic.

5. Procédé selon la revendication 1, dans lequel la construction du premier objet de routage explicite dans le sens inverse du chemin du LSP de protection comprend :
l'enregistrement successif, en fonction de l'inverse d'une séquence de tous les noeuds sur le LSP de protection, de tous les noeuds sur le LSP de protection dans le premier objet de routage explicite.

6. Procédé selon la revendication 1, comprenant en outre :
l'établissement d'un LSP de protection du LSP de retour.

7. Procédé selon la revendication 6, dans lequel l'établissement du LSP de protection du LSP de retour comprend :
l'enregistrement, par un dernier noeud dans la procédure d'établissement d'un LSP de travail, d'un chemin du LSP de travail à l'établissement du LSP de travail ;
la construction, par le dernier noeud dans la procédure d'établissement d'un LSP de travail, d'un second objet de routage explicite dans le sens inverse du chemin du LSP de travail ;
l'établissement du LSP de protection du LSP de retour en fonction du second objet de routage explicite.

8. Procédé selon la revendication 7, dans lequel l'enregistrement du chemin du LSP de travail comprend :
l'obtention du chemin du LSP de travail enregistré par un objet de routage explicite ou un objet de routage d'enregistrement transporté dans une requête d'établissement de LSP de travail, et la mémorisation du chemin du LSP de travail.

9. Procédé selon la revendication 7, dans lequel la construction du second objet de routage explicite dans le sens inverse du chemin du LSP de travail comprend :
l'enregistrement successif, en fonction de l'inverse d'une séquence de tous les noeuds sur le LSP de travail, de tous les noeuds sur le LSP de travail dans le second objet de routage explicite.

10. Système d'établissement d'un Chemin de Commutation d'Etiquettes, LSP, de retour, dans un système à Commutation d'Etiquettes Multiprotocole, MPLS, **caractérisé en ce qu'**il comprend :
un dernier noeud, adapté pour obtenir un chemin d'un LSP de protection correspondant à un LSP de travail en fonction d'un objet de routage explicite ou d'un objet de routage d'enregistrement transporté ou enregistré dans une requête d'établissement de LSP de protection, à l'établissement du LSP de protection, et
construire un premier objet de routage explicite dans le sens inverse du chemin du LSP de protection ; et
au moins un second noeud, sur le LSP de protection, chaque noeud étant adapté pour établir un LSP de retour afin d'envoyer des informations de défaillance de LSP du LSP de travail en fonction du premier objet de routage explicite.

11. Système selon la revendication 10, dans lequel le dernier noeud est adapté en outre pour enregistrer un chemin d'un LSP de travail à l'établissement du LSP de travail, et construire un second objet de routage explicite dans le sens inverse du chemin du LSP de travail ;
l'au moins un second noeud est adapté en outre pour établir le LSP de protection du LSP de retour en fonction du second objet de routage explicite.
